# FASCICULE DE BREVET EUROPEEN

(11) **EP 1 811 132 B1**
(45) Date de publication et mention de la délivrance du brevet: **15.10.2014**
(21) Numéro de dépôt: 07290041.8
(22) Date de dépôt: 11.01.2007
(51) Int. Cl.: F01D 9/06, F02C 7/275, H02K 7/14, H02K 5/22, F02C 7/268, F01D 15/10

(54) **Turbomachine à générateur-démarreur intégré**
Turbotriebwerk mit integriertem Starter-Generator
Turbomachine with integrated generator-starter

(30) Priorité: 24.01.2006 FR 0600617
(43) Date de publication de la demande: 25.07.2007
(73) Titulaire: SNECMA, 75015 Paris (FR); HISPANO-SUIZA, 92700 Colombes (FR)
(72) Inventeur: Bouiller, Philippe Pierre Vincent, 77210 Samoreau (FR); Lorand, Antony, 27200 Vernon (FR); Rousselin, Stéphane, 77850 Hericy (FR)
(74) Mandataire: Ramey, Daniel

(56) Documents cités:
- EP-A- 1 659 267
- EP-A- 1 662 636
- WO-A-2005/059316
- US-A- 4 531 357
- US-A- 5 237 817
- US-A1- 2004 189 108

## Description

L'invention concerne une turbomachine, telle qu'un turbopropulseur ou un turboréacteur d'avion, équipée d'un générateur électrique formant démarreur monté axialement dans la turbomachine, et elle concerne également un générateur-démarreur pour une turbomachine de ce type.

On a déjà proposé, dans le document EP-A-1 382 802, une turbomachine équipée d'un générateur-démarreur intégré dans laquelle le générateur-démarreur est monté dans l'alésage d'un ou deux disques à aubes mobiles du compresseur de la turbomachine.

Le document EP-A-1 662 636 décrit une turbomachine selon le préambule de la revendication 1.

Le document US-A-4,531,357 décrit un générateur logé dans un boîtier et dont le stator est relié à un câble électrique traversant des parois du boîtier.

La présente invention a notamment pour but d'améliorer ce type de turbomachine en facilitant le montage et le démontage du générateur-démarreur intégré, en particulier à des fins de maintenance, et en simplifiant ses connexions à des câbles électriques d'alimentation en courant ou de distribution de courant.

Elle propose à cet effet une turbomachine comprenant un générateur-démarreur électrique dont le rotor est entraîné par l'arbre d'un compresseur haute-pression et dont le stator est porté par un carter intermédiaire de la turbomachine, le générateur-démarreur étant enfermé dans un boîtier étanche monté dans une enceinte amont de la turbomachine qui est située à l'intérieur du carter intermédiaire et qui contient de l'huile, le boîtier étanche du générateur-démarreur étant alimenté en air sous pression, caractérisée en ce que le boîtier étanche comprend des premiers moyens de raccordement à des câbles électriques montés dans des bras structuraux du carter intermédiaire, ces premiers moyens de raccordement étant étanches et s'étendant à l'intérieur d'une chambre délimitée par le boîtier et par le carter intermédiaire et alimentée en air sous pression.

La disposition, selon l'invention, du générateur-démarreur dans l'enceinte amont de la turbomachine, entre le compresseur basse-pression et le compresseur haute-pression, permet de monter et de démonter le générateur-démarreur par translation axiale depuis la partie amont de la turbomachine, ce qui facilite les opérations de maintenance et réduit leur durée.

Par ailleurs, cette disposition permet de faire passer dans les bras structuraux du carter intermédiaire les câbles électriques raccordés au générateur-démarreur, qui sont des câbles rigides de section relativement élevée.

Comme cette enceinte amont de la turbomachine contient de l'huile, le générateur-démarreur logé dans cette enceinte est enfermé dans un boîtier étanche.

Pour faciliter les connexions électriques du générateur-démarreur aux câbles d'alimentation/distribution de courant, ce boîtier étanche est entouré par une chambre délimitée par le carter intermédiaire et par le boîtier et alimentée en air sous pression, cet air sous pression pouvant pénétrer dans le boîtier étanche par des orifices d'entrée ménagés dans celui-ci pour établir dans le boîtier une surpression d'air s'opposant à l'entrée d'huile.

Le boîtier étanche comprend des premiers moyens de raccordement aux câbles électriques passant dans les bras du carter intermédiaire, ces premiers moyens de raccordement traversant à étanchéité une paroi du boîtier et s'étendant à l'intérieur de la chambre alimentée en air sous pression.

Ces premiers moyens de raccordement sont reliés à l'extérieur du boîtier à des seconds moyens de raccordement qui forment une traversée étanche d'une paroi de la chambre alimentée en air sous pression et qui s'étendent à l'extérieur de cette chambre.

Les liaisons entre les premiers moyens de raccordement portés par le boîtier étanche et les seconds moyens de raccordement sont ainsi situées dans la chambre alimentée en air sous pression et sont protégées de l'huile contenue dans l'enceinte amont de la turbomachine.

Avantageusement, les premiers moyens de raccordement s'étendent à l'intérieur de cette chambre parallèlement à l'axe du rotor et sont montés par enfichage sur les seconds moyens de raccordement.

Par exemple, les premiers moyens de raccordement comprennent, à l'extérieur du boîtier, une prise femelle axiale enfichable sur une prise mâle axiale des seconds moyens de raccordement.

Cela permet un montage en aveugle du générateur-démarreur dans la turbomachine, les connexions électriques étant réalisées automatiquement au cours de ce montage.

Dans un mode de réalisation préféré de l'invention, le boîtier étanche du générateur-démarreur comprend un élément cylindrique externe, formant support du stator du générateur-démarreur et portant les premiers moyens de raccordement, un élément cylindrique interne formant le support du rotor du générateur-démarreur, et des capots annulaires amont et aval, fixés sur l'élément cylindrique externe à ses extrémités et coopérant à étanchéité avec l'élément cylindrique interne par l'intermédiaire de joints tournants.

Le générateur-démarreur selon l'invention et son boîtier étanche ont une structure modulaire facilitant leur montage et leur démontage et permettant de plus, pour les opérations de maintenance, de retirer de l'enceinte amont l'élément cylindrique interne portant le rotor du générateur-démarreur tout en laissant en place l'élément cylindrique externe portant le stator du générateur-démarreur.

L'invention propose également un générateur-démarreur pour une turbomachine du type décrit ci-dessus, comprenant un boîtier étanche constitué d'un élément cylindrique externe formant support de stator, d'un élément cylindrique interne coaxial à l'élément cylindrique externe et formant support de rotor, et de capots annulaires fixés aux extrémités axiales de l'élément cylindrique externe et coopérant avec l'élément cylindrique interne par des joints tournants, ce générateur-démarreur étant caractérisé en ce que des moyens coudés de raccordement des bobinages du stator à des câbles électriques sont portés par l'élément cylindrique externe du boîtier et débouchent axialement à l'extérieur du boîtier.

L'élément cylindrique externe du boîtier comporte un voile annulaire de fixation sur un carter intermédiaire de la turbomachine, et l'élément cylindrique interne de ce boîtier comporte une bride annulaire de fixation sur un arbre d'entraînement en rotation.

Dans ce générateur-démarreur, l'élément cylindrique interne comporte des moyens de support d'aimants permanents et l'élément cylindrique externe comporte des moyens de support de bobinages.

Ces deux éléments cylindriques sont pourvus de canaux de circulation d'huile de refroidissement.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- La figure 1 est une demi-vue schématique partielle en coupe axiale d'une turbomachine selon l'invention ;
- la figure 2 est une demi-vue schématique en coupe axiale, à plus grande échelle, du générateur-démarreur monté dans l'enceinte amont de la turbomachine ;
- la figure 3 est une vue agrandie illustrant des moyens de raccordement électrique de ce générateur-démarreur ;
- la figure 4 représente ces moyens de raccordement à l'état débranché ;
- la figure 5 représente schématiquement des moyens de connexion électrique du générateur-démarreur à des circuits électroniques de puissance ;

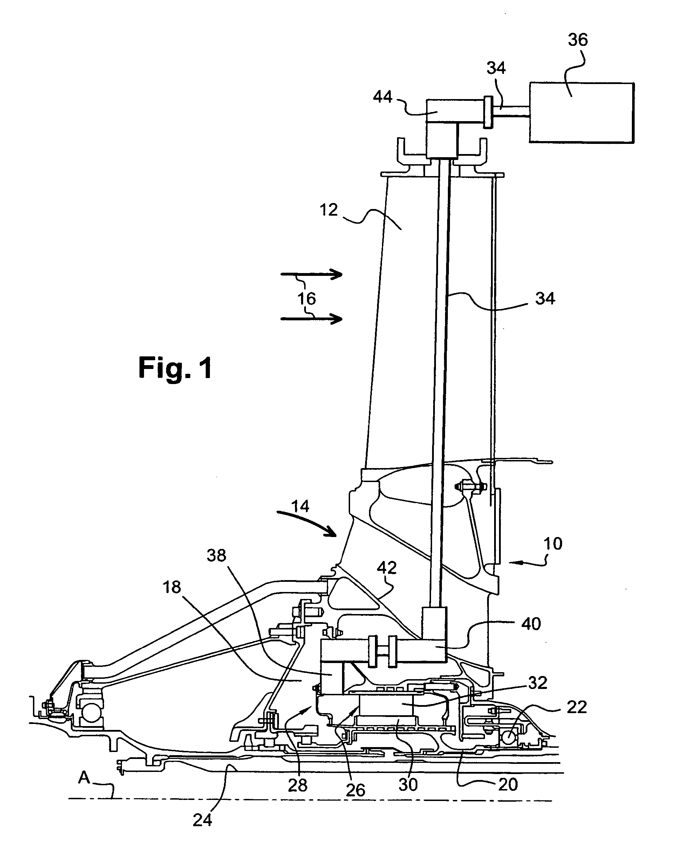

On a représenté schématiquement en figure 1 un carter intermédiaire 10 d'une turbomachine telle qu'un turboréacteur à double flux, ce carter intermédiaire se trouvant entre un compresseur basse-pression situé en amont et associé à une soufflante, et un compresseur haute-pression situé en aval et alimentant une chambre de combustion de la turbomachine.

Le carter intermédiaire 10 comprend des bras structuraux 12 qui s'étendent radialement dans le flux primaire 14 et dans le flux secondaire 16 et dont les extrémités externes supportent la nacelle de soufflante de la turbomachine.

Le carter intermédiaire 10 délimite intérieurement une enceinte amont 18 dans laquelle sont logés l'extrémité amont de l'arbre 20 du compresseur haute-pression et un palier 22 de guidage de cet arbre, l'enceinte 18 étant traversée axialement par l'arbre 24 de la turbine, dont la partie amont constitue l'arbre d'entraînement du compresseur basse-pression de la turbomachine.

Un générateur électrique 26 pouvant fonctionner également en démarreur est logé dans un boîtier étanche 28 à l'intérieur de l'enceinte 18 et comprend un rotor 30 entraîné par l'arbre 20 du compresseur haute-pression et un stator 32 porté par le carter intermédiaire 10, le rotor 30 comportant des aimants permanents qui tournent à l'intérieur de bobinages électriques faisant partie du stator 32.

Ces bobinages sont reliés à des conducteurs électriques 34 de distribution de courant (fonctionnement en générateur) et d'alimentation en courant (fonctionnement en démarreur) et qui sont logés dans les bras structuraux 12 du carter intermédiaire 10. Ces conducteurs relient le générateur-démarreur 26 à des circuits électroniques de puissance 36 montés à l'intérieur de la nacelle de la soufflante, en aval du carter intermédiaire 10.

Les conducteurs électriques 34 sont des câbles rigides de section relativement importante (par exemple d'environ 50 mm²) qu'il est très difficile ou impossible d'incurver et qui suivent des chemins rectilignes dans les bras structuraux 12 du carter intermédiaire. Ces conducteurs 34 sont reliés au générateur-démarreur 26 et au circuit électronique 36 par l'intermédiaire de moyens coudés de raccordement, comprenant des premiers moyens de raccordement 38 portés par le boîtier étanche 28 du générateur-démarreur 26, des seconds moyens de raccordement 40 portés par une paroi annulaire 42 du carter intermédiaire délimitant intérieurement la veine du flux primaire 14 et entourant extérieurement l'enceinte amont 18, et des troisièmes moyens de raccordement 44 portés par les extrémités externes des bras structuraux 12.

Dans un exemple de réalisation, quatre ensembles de premiers, seconds et troisièmes moyens de raccordement, 38, 40 et 44, sont prévus pour relier le générateur-démarreur 26 aux circuits électroniques 36, ces quatre ensembles étant répartis à 90° les uns des autres autour de l'axe A de la turbomachine, et les troisièmes moyens 44 de raccordement étant reliés chacun par des conducteurs 34 du type précité aux circuits électroniques de puissance 36.

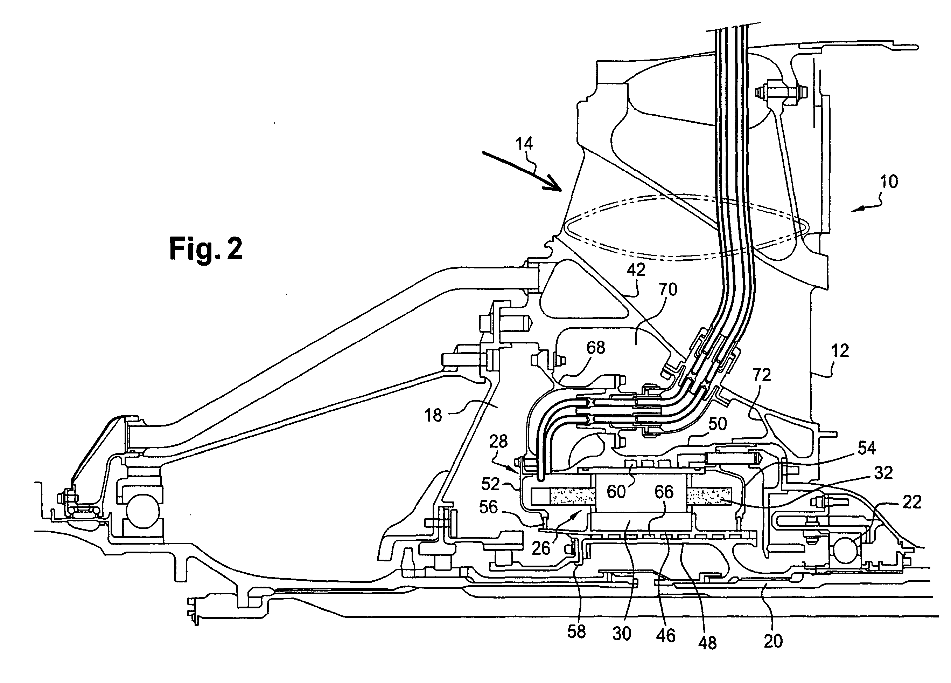

Comme on le voit mieux en figure 2, le boîtier 28 du générateur-démarreur 26 comprend un élément cylindrique interne 46 qui porte les aimants permanents constituant le rotor 30 du générateur-démarreur et qui est monté en translation axiale sur un arbre support 48 porté par l'extrémité amont de l'arbre 20 du compresseur haute-pression, le boîtier 28 comprenant également un élément cylindrique externe 50, coaxial à l'élément cylindrique interne 46 et portant le stator 32 du générateur-démarreur, et des capots annulaires amont 52 et aval 54 qui sont fixés aux extrémités axiales de l'élément cylindrique externe 50 et qui coopèrent à étanchéité par des joints tournants 56 avec les extrémités axiales de l'élément cylindrique interne 46.

L'extrémité amont de l'élément cylindrique interne 46 comprend une bride annulaire interne 58 de fixation, au moyen de vis, sur l'arbre support 48 solidaire de l'arbre 20 du compresseur haute-pression. Le capot annulaire amont 52 est fixé par des vis accessibles depuis l'amont sur l'extrémité amont de l'élément cylindrique externe 50 du boîtier 28.

Des canaux 60 de circulation d'huile de refroidissement sont formés dans l'élément externe 50 et alimentés en huile à leur extrémité amont par un conduit raccordé à une canalisation d'amenée d'huile passant dans l'enceinte 18. A leur extrémité aval, ces canaux 60 sont reliés au circuit de lubrification du palier amont 22 de guidage de l'arbre 20.

Des canaux 66 de circulation d'huile de refroidissement sont également formés dans l'élément cylindrique interne 46 et débouchent à leur extrémité aval dans l'enceinte 18, du côté du palier 22.

L'élément cylindrique externe 50 du boîtier 28 comporte un voile annulaire externe 68 de fixation au moyen de vis sur la paroi annulaire 42 du carter intermédiaire 10, ce voile annulaire délimitant autour de l'élément cylindrique externe 50 une chambre 70 fermée du côté aval par un voile annulaire 72 dépendant de la paroi annulaire 42 du carter intermédiaire, ce voile annulaire 72 se terminant à sa périphérie interne par une portée cylindrique dans laquelle est engagée à étanchéité l'extrémité aval de l'élément cylindrique interne 50 du boîtier 28.

La chambre 70 qui entoure l'élément cylindrique externe 50 est alimentée en air sous pression à partir du flux primaire 14 par des orifices de la paroi annulaire 42 qui débouchent dans la chambre 70. Des passages formés dans l'élément cylindrique externe 50 débouchent à l'intérieur du boîtier 28 et amènent l'air sous pression à l'intérieur de ce boîtier autour du générateur-démarreur 26 pour empêcher toute entrée d'huile dans le boîtier 28 depuis l'enceinte amont 18 de la turbomachine.

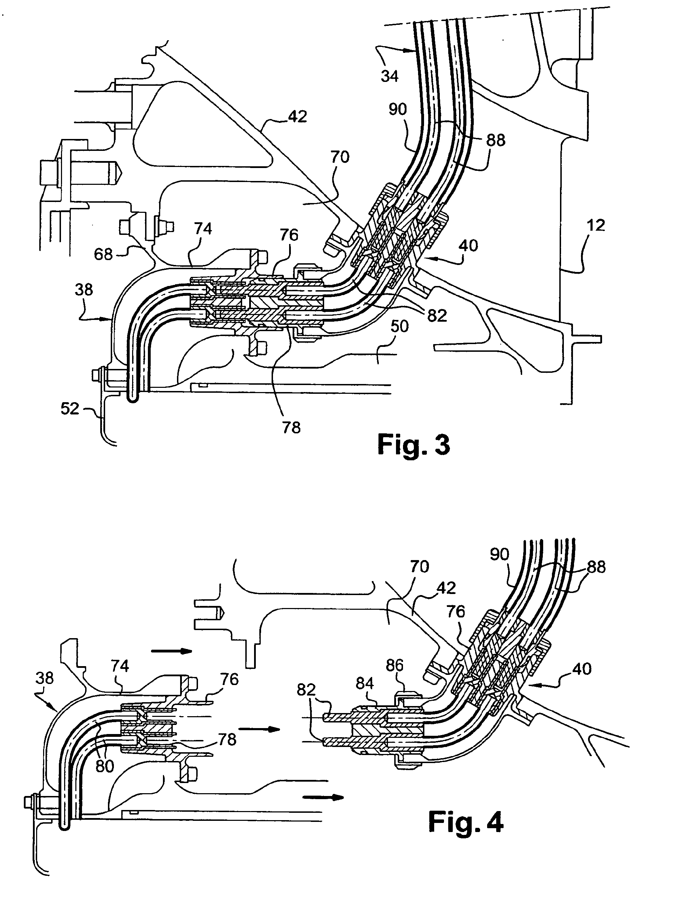

Comme on le voit mieux aux figures 3 et 4, les premiers moyens 38 de raccordement portés par le boîtier étanche 28 et les seconds moyens 40 de raccordement portés par la paroi annulaire 42 du carter intermédiaire, débouchent dans la chambre 70 de façon à éviter toute pollution des liaisons électriques entre ces moyens de raccordement par l'huile contenue dans l'enceinte 18.

Plus précisément, les premiers moyens de raccordement 38 comprennent un conduit 74 coudé à 90°, solidaire de l'élément cylindrique 50 externe du boîtier 28, ce conduit coudé 74 débouchant à l'intérieur du boîtier 28 par son extrémité radialement interne et étant fermé à son extrémité radialement externe par un connecteur 76 formant une prise femelle fixée par des vis sur l'extrémité externe du conduit 74.

Dans l'exemple représenté, le connecteur 76 comprend une embase en matière diélectrique, dans laquelle sont montés trois conducteurs tubulaires 78 qui, à leur extrémité amont, reçoivent trois conducteurs 80 reliés aux bobinages du stator du générateur-démarreur et qui, à leur extrémité aval, sont destinés à recevoir des broches 82 montées dans une embase 84 en matériau diélectrique d'un connecteur mâle 86 faisant partie des seconds moyens 40 de raccordement.

Les conducteurs 78 de la prise femelle des premiers moyens de raccordement 38 s'étendent parallèlement à l'axe du générateur-démarreur 26, ainsi que les broches 82 de la prise mâle des seconds moyens de raccordement et sont alignés axialement avec ces broches. L'embase 84 de la prise mâle des seconds moyens de raccordement 40 est dimensionnée pour s'emboîter à étanchéité dans l'embase femelle 76 des premiers moyens de raccordement 38. Ainsi, lorsque l'élément cylindrique externe 50 portant les premiers moyens de raccordement 38 est mis en place par translation axiale de l'amont vers l'aval, l'embase femelle 76 s'engage directement sur l'embase mâle 84 et les connecteurs 76 et 86 sont automatiquement raccordés l'un à l'autre, les broches 82 étant engagées dans les conducteurs tubulaires 78 du connecteur 76.

Inversement, au démontage du générateur-démarreur 26, la translation axiale de l'aval vers l'amont de l'élément cylindrique externe 50 se traduit automatiquement par la séparation des connecteurs 76 et 84 comme représenté en figure 4.

Les seconds moyens de raccordement 40 sont portés par la paroi annulaire 42 du carter intermédiaire 10 et traversent à étanchéité cette paroi. Ils sont constitués essentiellement du connecteur mâle 86 précédemment décrit qui s'étend depuis la paroi 42 à l'intérieur de la chambre 70 et d'un connecteur femelle 76 identique à celui des premiers moyens de raccordement 38 et qui s'étend à l'extérieur de la paroi annulaire 42 dans la veine du flux primaire 14. Les deux connecteurs 86 et 76 des seconds moyens de raccordement 40 sont réunis par leurs brides annulaires externes qui sont fixées par des vis sur la paroi annulaire 42 du carter intermédiaire depuis la chambre 70.

Les conducteurs tubulaires 78 du connecteur 76 des seconds moyens de raccordement 40 reçoivent des conducteurs rigides 88, au nombre de trois, qui sont logés dans une gaine 90 de blindage et qui s'étendent radialement vers l'extérieur à l'intérieur du bras 12 du carter intermédiaire.

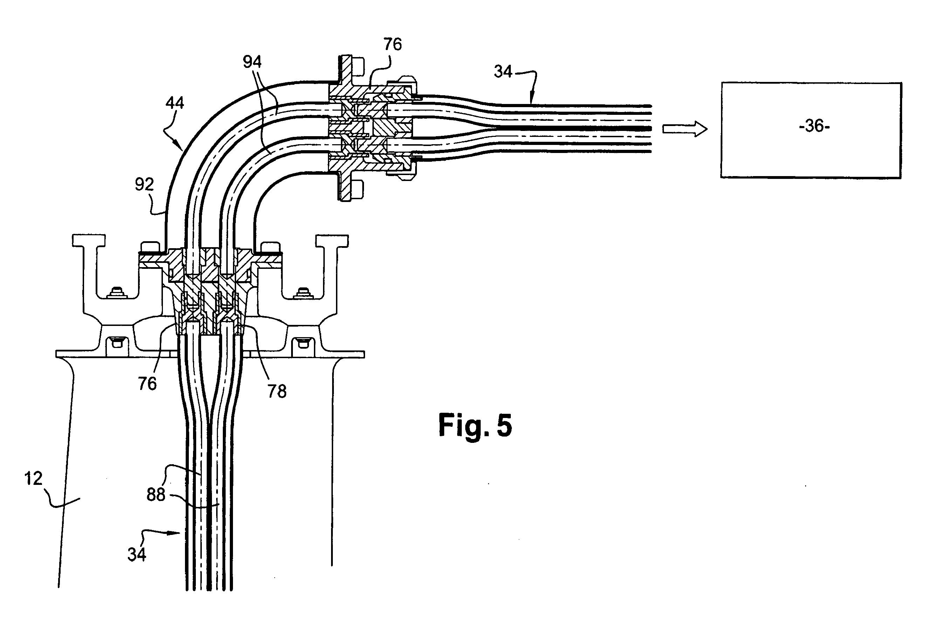

A leur extrémité radialement externe, ces conducteurs 88 sont reliés (figure 5) par les troisièmes moyens de raccordement 44 et des conducteurs 34 aux circuits électroniques de puissance 36 représentés en figure 1.

Les troisièmes moyens de raccordement 44 comprennent un conduit 92 coudé à 90° et aux extrémités duquel sont montés des connecteurs femelles 76 du type précédemment décrit, reliés entre eux à l'intérieur du conduit 92 par des conducteurs 94.

Pour le montage du générateur-démarreur, on procède de la façon suivante :
- l'arbre 48 de support du rotor du générateur-démarreur est d'abord mis en place et monté sur l'arbre du compresseur haute-pression de la turbomachine,
- ensuite, l'élément cylindrique externe 50 équipé du capot aval 54 est mis en place par translation axiale de l'amont vers l'aval, et est fixé au carter intermédiaire par son voile annulaire externe 68. La liaison électrique entre les premiers et les seconds moyens de raccordement 38, 40 s'effectue automatiquement, ainsi que la connexion de l'alimentation en huile du palier 22,
- on procède ensuite à la connexion des moyens d'alimentation en huile des canaux 60 de l'élément cylindrique externe 50,
- on met ensuite en place, par translation axiale de l'amont vers l'aval, l'élément cylindrique interne 46 portant le rotor 30 du générateur-démarreur et on fixe sa bride annulaire 58 par des vis ou des boulons sur l'arbre support 48,
- on met ensuite en place le capot amont 52 et on le fixe au moyen de vis sur l'élément cylindrique externe 50.

Le générateur-démarreur selon l'invention présente un certain nombre d'avantages :
- sa structure modulaire facilite son montage et son démontage dans la turbomachine,
- le stator du générateur-démarreur, porté par l'élément cylindrique externe 50, peut rester fixé sur le carter intermédiaire lors du démontage de l'arbre du compresseur haute-pression pendant les opérations de maintenance,
- les moyens de raccordement électrique du générateur-démarreur se trouvent dans une enceinte d'air pressurisée à l'extérieur de l'enceinte amont 18 de la turbomachine,
- les câbles électriques de liaison 34 sont protégés à l'intérieur des bras structuraux 12 du carter intermédiaire,
- les moyens de raccordement 38, 40, 42 sont préassemblés et étanches et permettent d'utiliser des câbles ou des conducteurs blindés, rigides et rectilignes, que l'on n'a pas à courber,
- les liaisons électriques entre les premiers et les seconds moyens de raccordement 38, 40 s'effectuent en aveugle de façon sûre par translation axiale.

## Revendications

1. Turbomachine comprenant un générateur-démarreur électrique (26) dont le rotor (30) est entraîné par l'arbre (20) d'un compresseur haute-pression et dont le stator (32) est porté par un carter intermédiaire (10) de la turbomachine, le générateur-démarreur (26) étant enfermé dans un boîtier étanche (28) monté dans une enceinte amont (18) de la turbomachine qui est située à l'intérieur du carter intermédiaire et qui contient de l'huile, le boîtier étanche (28) du générateur-démarreur étant alimenté en air sous pression, **caractérisée en ce que** le boîtier étanche (28) comprend des premiers moyens (38) de raccordement à des câbles électriques (34) montés dans des bras structuraux du carter intermédiaire, ces premiers moyens de raccordement étant étanches et s'étendant à l'intérieur d'une chambre (70) délimitée par le boîtier (28) et par le carter intermédiaire et alimentée en air sous pression.

2. Turbomachine selon la revendication 1, **caractérisée en ce que** les premiers moyens de raccordement (38) sont reliés à l'extérieur du boîtier (28) à des seconds moyens de raccordement (40) qui traversent à étanchéité une paroi (42) de la chambre (70) alimentée en air sous pression et qui s'étendent à l'extérieur de cette chambre dans les bras structuraux (12) du carter intermédiaire.

3. Turbomachine selon la revendication 2, **caractérisée en ce que** les premiers moyens de raccordement (38) s'étendent à l'intérieur de la chambre (70) parallèlement à l'axe du rotor et sont reliés par enfichage axial aux seconds moyens de raccordement (40).

4. Turbomachine selon la revendication 3, **caractérisée en ce que** les premiers moyens de raccordement (38) comprennent, à l'extérieur du boîtier, un connecteur (76) à prise femelle axiale enfichable sur une prise mâle axiale d'un connecteur des seconds moyens de raccordement (40).

5. Turbomachine selon l'une des revendications 2 à 4, **caractérisée en ce que** les premiers et les seconds moyens de raccordement (38, 40) sont coudés.

6. Turbomachine selon l'une des revendications 1 à 5, **caractérisée en ce que** le boîtier étanche (28) comprend un élément cylindrique externe (50), formant support du stator (32) du générateur-démarreur et portant les premiers moyens de raccordement (38), un élément cylindrique interne (46) formant le support du rotor (30) du générateur-démarreur, et des capots annulaires amont et aval (52, 54) fixés sur l'élément cylindrique externe (50) à ses extrémités et coopérant à étanchéité avec l'élément cylindrique interne (46) par l'intermédiaire de joints tournants (56).

7. Turbomachine selon la revendication 6, **caractérisée en ce que** l'élément cylindrique externe (50) du boîtier comprend un voile annulaire (68) de fixation sur le carter intermédiaire (10) et est montable et démontable par translation axiale depuis la partie amont de l'enceinte (18).

8. Turbomachine selon la revendication 6 ou 7, **caractérisée en ce que** l'élément cylindrique interne (46) est fixé à son extrémité amont sur un arbre support (48) entraîné par l'arbre du compresseur haute-pression et est montable et démontable sur cet arbre par translation axiale depuis la partie amont de l'enceinte (18).

9. Turbomachine selon l'une des revendications 6 à 8, **caractérisée en ce que** les éléments cylindriques interne (46) et externe (50) du boîtier sont refroidis par circulation d'huile.

10. Turbomachine selon l'une des revendications 1 à 9, **caractérisée en ce que** le boîtier étanche (28) comporte plusieurs premiers moyens (38) de raccordement électrique, reliés par enfichage axial à plusieurs seconds moyens (40) de raccordement portés par le carter intermédiaire (10) et reliés par des câbles (34) et des troisièmes moyens de raccordement (42) portés par le carter intermédiaire (10) à des circuits électroniques de puissance (36) montés dans une nacelle de soufflante de la turbomachine.

11. Générateur-démarreur pour une turbomachine selon l'une des revendications précédentes, comprenant un boîtier étanche (28) renfermant un rotor et un stator, ce boîtier étant constitué d'un élément cylindrique externe (50) formant support de stator, d'un élément cylindrique interne (46) coaxial à l'élément cylindrique externe et formant support de rotor, et de capots annulaires (52, 54) fixés aux extrémités axiales de l'élément cylindrique externe (50) et coopérant avec l'élément cylindrique interne (46) par des joints tournants (56), **caractérisé en ce que** des moyens coudés (38) de raccordement des bobinages du stator (32) à des câbles électriques sont portés par l'élément cylindrique externe (50) du boîtier, à une de leurs extrémités, et débouchent axialement à l'extérieur du boîtier, à l'autre de leurs extrémités.

12. Générateur-démarreur selon la revendication 11, **caractérisé en ce que** l'élément cylindrique externe (50) du boîtier comporte un voile annulaire de fixation sur un carter intermédiaire de la turbomachine.

13. Générateur-démarreur selon la revendication 11 ou 12, **caractérisé en ce que** l'élément cylindrique interne (46) comporte une bride annulaire (58) de fixation sur un arbre d'entraînement en rotation.

14. Générateur-démarreur selon l'une des revendications 11 à 13, **caractérisé en ce que** l'élément cylindrique interne (46) comporte des moyens de support d'aimants permanents formant le rotor du générateur-démarreur et l'élément cylindrique externe (50) comporte des moyens de support de bobinages formant le stator du générateur-démarreur.

15. Générateur-démarreur selon l'une des revendications 11 à 14, **caractérisé en ce que** les éléments cylindriques interne (46) et externe (50) du boîtier comprennent des canaux (60, 66) de circulation d'huile de refroidissement.

## Patentansprüche

1. Turbomaschine bzw. Turbotriebwerk, enthaltend einen elektrischen Starter-Generator (26), dessen Rotor (30) über die Welle (20) eines Hochdruckverdichters angetrieben wird und dessen Stator (32) von einem Zwischengehäuse (10) der Turbomaschine bzw. des Turbotriebwerks getragen wird, wobei der Starter-Generator (26) von einem dichten Gehäuse (28) umschlossen wird, das in einem stromaufwärtigen Raum (18) der Turbomaschine bzw. des Turbotriebwerks montiert ist, der sich innerhalb des Zwischengehäuses befindet und Öl enthält, wobei das dichte Gehäuse (28) des Starter-Generators mit Druckluft versorgt wird, **dadurch gekennzeichnet, dass** das dichte Gehäuse (28) erste Anschlussmittel (38) zum Anschließen an elektrische Kabel (34) aufweist, die in Strukturauslegern des Zwischengehäuses montiert sind, wobei diese ersten Anschlussmittel abgedichtet sind und sich innerhalb einer Kammer (70) erstrecken, die von dem Gehäuse (28) und von dem Zwischengehäuse begrenzt wird und mit Druckluft versorgt wird.

2. Turbomaschine bzw. Turbotriebwerk nach Anspruch 1, **dadurch gekennzeichnet, dass** die ersten Anschlussmittel (38) außerhalb des Gehäuses (28) mit zweiten Anschlussmitteln (40) verbunden sind, welche unter Dichtheit eine Wand (42) der mit Druckluft versorgten Kammer (70) durchsetzen und sich außerhalb dieser Kammer in den Strukturauslegern (12) des Zwischengehäuses erstrecken.

3. Turbomaschine bzw. Turbotriebwerk nach Anspruch 2, **dadurch gekennzeichnet, dass** die ersten Anschlussmittel (38) sich innerhalb der Kammer (70) parallel zur Achse des Rotors erstrecken und durch axiales Einstecken mit den zweiten Anschlussmitteln (40) verbunden sind.

4. Turbomaschine bzw. Turbotriebwerk nach Anspruch 3, **dadurch gekennzeichnet, dass** die ersten Anschlussmittel (38) außerhalb des Gehäuses einen Verbinder (76) mit axialer Buchse aufweisen, der auf einen axialen Stecker eines Verbinders der zweiten Anschlussmittel (40) aufsteckbar ist.

5. Turbomaschine bzw. Turbotriebwerk nach einem der Ansprüche 2 bis 4, **dadurch gekennzeichnet, dass** die ersten und die zweiten Anschlussmittel (3 8, 40) gekröpft sind.

6. Turbomaschine bzw. Turbotriebwerk nach einem der Ansprüche 1 bis 5, **dadurch gekennzeichnet, dass** das dichte Gehäuse (28) ein zylindrisches Außenteil (50) aufweist, das eine Halterung für den Stator (32) des Starter-Generators bildet und die ersten Anschlussmittel (38) trägt, sowie ein zylindrisches Innenteil (46), das die Halterung für den Rotor (30) des Starter-Generators bildet, und stromaufwärtige bzw. stromabwärtige Ringkappen (52, 54), die an das zylindrische Außenteil (50) an seinen Enden befestigt sind und mit dem zylindrischen Innenteil (46) über Drehgelenke (56) unter Dichtheit zusammenwirken.

7. Turbomaschine bzw. Turbotriebwerk nach Anspruch 6, **dadurch gekennzeichnet, dass** das zylindrische Außenteil (50) des Gehäuses einen ringförmigen Deckmantel (68) zum Befestigen an das Zwischengehäuse (10) aufweist und durch axiales Verschieben ausgehend von dem stromaufwärtigen Abschnitt des Raums (18) montierbar bzw. abmontierbar ist.

8. Turbomaschine bzw. Turbotriebwerk nach Anspruch 6 oder 7, **dadurch gekennzeichnet, dass** das zylindrische Innenteil (46) an seinem stromaufwärtigen Ende an eine Tragwelle (48) befestigt ist, die über die Welle des Hochdruckverdichters angetrieben wird und durch axiales Verschieben ausgehend von dem stromaufwärtigen Abschnitt des Raums (18) an diese Welle montierbar bzw. davon abmontierbar ist.

9. Turbomaschine bzw. Turbotriebwerk nach einem der Ansprüche 6 bis 8, **dadurch gekennzeichnet, dass** das zylindrische Innenteil (46) und das zylindrische Außenteil (50) des Gehäuses durch Ölumlauf gekühlt werden.

10. Turbomaschine bzw. Turbotriebwerk nach einem der Ansprüche 1 bis 9, **dadurch gekennzeichnet, dass** das dichte Gehäuse (28) mehrere erste Anschlussmittel (38) für den elektrischen Anschluss aufweist, die durch axiales Einstecken mit mehreren zweiten Anschlussmitteln (40) verbunden sind, die von dem Zwischengehäuse (10) getragen werden und über Kabel (34) und dritte Anschlussmittel (42), die von dem Zwischengehäuse (10) getragen werden, mit elektronischen Leistungsschaltungen (36) verbunden sind, die in einer Fan-Gondel der Turbomaschine bzw. des Turbotriebwerks montiert sind.

11. Starter-Generator für eine Turbomaschine bzw. ein Turbotriebwerk nach einem der vorangehenden Ansprüche, enthaltend ein dichtes Gehäuse (28), das einen Rotor und einen Stator umschließt, wobei dieses Gehäuse aus einem zylindrischen Außenteil (50), das eine Stator-Halterung bildet, einem zylindrischen Innenteil (46), das koaxial zum zylindrischen Außenteil verläuft und eine Rotor-Halterung bildet, und aus Ringkappen (52, 54) besteht, die an die axialen Enden des zylindrischen Außenteils (50) befestigt sind und mit dem zylindrischen Innenteil (46) über Drehgelenke (56) zusammenwirken, **dadurch gekennzeichnet, dass** gekröpfte Anschlussmittel (38) zum Anschließen der Wicklungen des Stators (32) an elektrische Kabel von dem zylindrischen Außenteil (50) des Gehäuses an einem ihrer Enden getragen werden und axial außerhalb des Gehäuses an ihrem anderen Ende ausmünden.

12. Starter-Generator nach Anspruch 11, **dadurch gekennzeichnet, dass** das zylindrische Außenteil (50) des Gehäuses einen ringförmigen Deckmantel zum Befestigen an ein Zwischengehäuse der Turbomaschine bzw. des Turbotriebwerks enthält.

13. Starter-Generator nach Anspruch 11 oder 12, **dadurch gekennzeichnet, dass** das zylindrische Innenteil (46) einen ringförmigen Flansch (58) zum Befestigen an eine Drehantriebswelle aufweist.

14. Starter-Generator nach einem der Ansprüche 11 bis 13, **dadurch gekennzeichnet, dass** das zylindrische Innenteil (46) Mittel zum Tragen von Dauermagneten enthält, die den Rotor des Starter-Generators bilden, und das zylindrische Außenteil (50) Mittel zum Tragen von Wicklungen enthält, die den Stator des Starter-Generators bilden.

15. Starter-Generator nach einem der Ansprüche 11 bis 14, **dadurch gekennzeichnet, dass** das zylindrische Innenteil (46) und das zylindrische Außenteil (50) des Gehäuses Strömungskanäle (60, 66) für Kühlöl enthalten.

## Claims

1. A turbomachine comprising an electrical generator/starter (26) whose rotor (30) is driven by the shaft (20) of a high-pressure compressor and whose stator (32) is carried by an intermediate casing (10) of the turbomachine, the generator/starter (26) being encased in a leaktight housing (28) mounted in an upstream enclosure (18) of the turbomachine which is situated inside the intermediate casing and which contains oil, the leaktight housing (28) of the generator/starter being supplied with compressed air, wherein the leaktight housing (28) comprises first means (38) of coupling to electrical cables (34) mounted in structural arms of the intermediate casing, these first means of coupling being leaktight and extending inside a chamber (70) delimited by the housing (28) and by the intermediate casing and supplied with compressed air.

2. The turbomachine as claimed in claim 1, wherein the first means of coupling (38) are couple outside the housing (28) to second means of coupling (40) which pass leaktightly through a wall (42) of the chamber (70) supplied with compressed air and which extend outside this chamber into the structural arms (12) of the intermediate casing.

3. The turbomachine as claimed in claim 2, wherein the first means of coupling (38) extend inside the chamber (70) parallel to the axis of the rotor and are pushed axially onto the second means of coupling (40).

4. The turbomachine as claimed in claim 3, wherein the first means of coupling (38) comprise, outside the housing, a connector (76) with an axial female portion that can be pushed onto an axial male portion of a connector of the second means of coupling (40).

5. The turbomachine as claimed in one of claims 2 to 4, wherein the first and the second means of coupling (38, 40) are bent.

6. The turbomachine as claimed in one of claims 1 to 5, wherein the leaktight housing (28) comprises an external cylindrical element (50) forming a support of the stator (32) of the generator/starter and carrying the first means of coupling (38), an internal cylindrical element (46) forming the support of the rotor (30) of the generator/starter, and upstream and downstream annular hoods (52, 54) fixed to the external cylindrical element (50) at its ends and cooperating leaktightly with the internal cylindrical element (46) by way of rotating seals (56).

7. The turbomachine as claimed in claim 6, wherein the external cylindrical element (50) of the housing comprises an annular shell (68) for fixing to the intermediate casing (10) and can be mounted and dismounted by axial translation from the upstream part of the enclosure (18).

8. The turbomachine as claimed in claim 6 or 7, wherein the internal cylindrical element (46) is fixed at its upstream end to a support shaft (48) driven by the shaft of the high-pressure compressor and can be mounted on and dismounted from this shaft by axial translation from the upstream part of the enclosure (18).

9. The turbomachine as claimed in one of claims 6 to 8, wherein the internal (46) and external (50) cylindrical elements of the housing are cooled by oil circulation.

10. The turbomachine as claimed in one of claims 1 to 9, wherein the leaktight housing (28) comprises several first means (38) of electrical coupling, pushed axially onto several second means (40) of coupling carried by the intermediate casing (10) and couple by cables (34), and third means of coupling (42) carried by the intermediate casing (10) to electronic power circuits (36) mounted in a fan nacelle of the turbomachine.

11. A generator/starter for a turbomachine as claimed in one of the preceding claims, comprising a leaktight housing (28) encasing a rotor and a stalor, the housing consisting of: an external cylindrical element (50) forming a stator support; an internal cylindrical element (46) coaxial with the external cylindrical element and forming a rotor support; and annular hoods (52, 54) fixed to the axial ends of the external cylindrical element (50) and cooperating with the internal cylindrical element (46) via rotating seals (56); wherein bent means (38) of coupling the coils of the stator (32) to electrical cables are carried by the external cylindrical element (50) of the housing, at one of their ends, and emerge axially outside the housing, at the other one of their ends.

12. The generator/starter as claimed in claim 11, wherein the external cylindrical element (50) of the housing comprises an annular shell for fixing to an intermediate casing of the turbomachine.

13. The generator/starter as claimed in claim 11 or 12, wherein the internal cylindrical element (46) comprises an annular flange (58) for fixing to a rotational drive shaft.

14. The generator/starter as claimed in one of claims 11 to 13, wherein the internal cylindrical element (46) comprises means of support for permanent magnets forming the rotor of the generator/starter and the external cylindrical element (50) comprises means of support for coils forming the stator of the generator/starter.

15. The generator/starter as claimed in one of claims 11 to 14, wherein the internal (46) and external (50) cylindrical elements of the housing comprise channels (60, 66) for circulation of cooling oil.
